# EUROPEAN PATENT APPLICATION

(11) **EP 4 745 055 A1**
(43) Date of publication of application: **20.05.2026**
(21) Application number: 23945810.2
(22) Date of filing: 14.07.2023
(51) Int. Cl.: B65G 1/00

(54) **UNMANNED CARRIER AND CARRIAGE POSITION IDENTIFICATION METHOD**

(71) Applicant: Fuji Corporation, Chiryu-shi, Aichi 472-8686 (JP)
(72) Inventor: ODA Takuya, Chiryu-shi, Aichi 472-8686 (JP)
(74) Representative: Grünecker Patent- und Rechtsanwälte PartG mbB
(86) International application number: PCT/JP2023/026136
(87) International publication number: WO 2025/017805

(57) **Abstract**

An unmanned carrier includes: a candidate recognition section configured to recognize a feature portion candidate of a carriage in vicinity; a reading section configured to read identification information provided on the carriage or a cargo mounted on the carriage; and a carriage recognition section configured to set a reading range based on a position of the feature portion candidate recognized by the candidate recognition section and recognize the carriage based on a reading result within the reading range obtained by the reading section.

## Description

### Technical Field

The present description discloses an unmanned carrier and a carriage position identification method.

### Background Art

Conventionally, an unmanned carrier for conveying a caged carriage is known. For example, Patent Literature 1 discloses a self-propelled robot that captures an image of a marker of an ID display panel attached to a caged carriage with a camera, acquires relative position information of the read marker with respect to the camera based on the captured image, moves to the front of the caged carriage using the relative position information, and conveys the caged carriage in connection with the caged carriage.

### Citation List

### Patent Literature

Patent Literature 1: JP-A-2018-90084

### Summary of the Invention

### Technical Problem

Although Patent Literature 1 describes that the marker provided on the carriage is read by the camera to recognize the carriage, Patent Literature 1 does not mention a case where the marker (identification information) is not attached to a designated position of the carriage, and there is still room for improvement.

A main object of the present disclosure is to more accurately recognize a carriage to be conveyed.

### Solution to Problem

The present disclosure adopts the following means to achieve the above-described main object.

An unmanned carrier according to the present disclosure is an unmanned carrier for conveying a carriage, the unmanned carrier includes:
a candidate recognition section configured to recognize a feature portion candidate of the carriage in vicinity;
a reading section configured to read identification information provided on the carriage or a cargo mounted on the carriage; and
a carriage recognition section configured to set a reading range based on a position of the feature portion candidate recognized by the candidate recognition section and recognize the carriage based on a reading result within the reading range obtained by the reading section.

In the unmanned carrier according to the present disclosure, by recognizing the feature portion candidate of the carriage in the vicinity and setting the reading range of the identification information based on the position of the feature portion candidate, it is possible to more reliably read the identification information provided on the carriage or the cargo even when the identification information is not attached to a designated position of the carriage. As a result, it is possible to more accurately recognize the carriage.

A carriage position identification method according to the present disclosure is a carriage position identification method for identifying a position of a carriage, the carriage position identification method includes:
recognizing a feature portion candidate of the carriage in vicinity;
setting a reading range based on a position of the recognized feature portion candidate;
reading identification information provided on the carriage or a cargo mounted on the carriage in the reading range; and
recognizing the carriage based on a reading result and identifying the position of the carriage based on the position of the feature portion candidate used for recognizing the carriage.

In the carriage position identification method according to the present disclosure, similarly to the unmanned carrier according to the present disclosure, it is possible to more reliably read the identification information provided on the carriage or the cargo to recognize the carriage even when the identification information is not attached to a designated position of the carriage. Further, it is possible to identify the position of the carriage based on the position of the feature portion candidate used for recognizing the carriage.

### Brief Description of Drawings

Fig. 1 is an external perspective view of multiple caged carriages disposed in a carriage storage area of a shop or the like and an unmanned carrier for conveying the caged carriages.
Fig. 2 is an external perspective view of the unmanned carrier, the caged carriages, and a marker.
Fig. 3 is an external perspective view of the unmanned carrier, the caged carriages, and the marker.
Fig. 4 is an external perspective view of the unmanned carrier.
Fig. 5 is a side view of the unmanned carrier.
Fig. 6 is a side view of the unmanned carrier.
Fig. 7 is a view illustrating a state in which the unmanned carrier has entered a space below the caged carriage.
Fig. 8 is a view illustrating a state in which the unmanned carrier is coupled to the caged carriage.
Fig. 9 is a block diagram of a conveyance system including the unmanned carrier and a management device.
Fig. 10 is a flowchart illustrating an example of a conveyance control routine.
Fig. 11 is a view illustrating a state in which the caged carriage is recognized.
Fig. 12 is a view illustrating an example of peripheral point cloud data and a set (cluster) of points.
Fig. 13 is a view illustrating an example of a carriage candidate.
Fig. 14 is a view illustrating an example of a marker reading range.

### Description of Embodiments

Next, an embodiment of the present disclosure will be described with reference to the drawings.

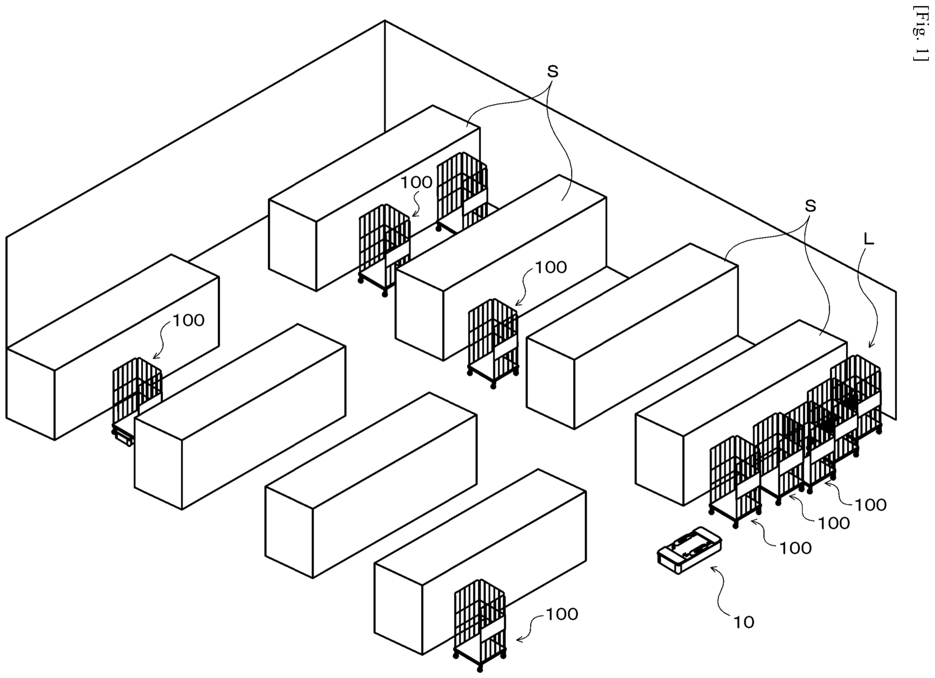

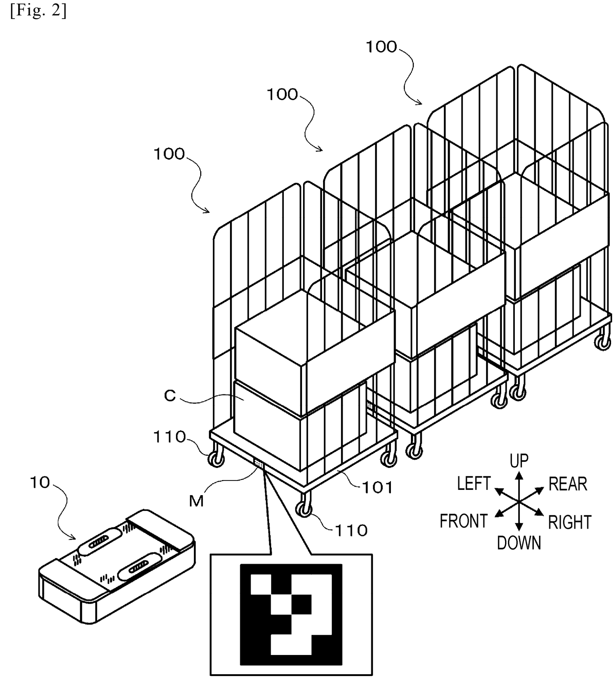

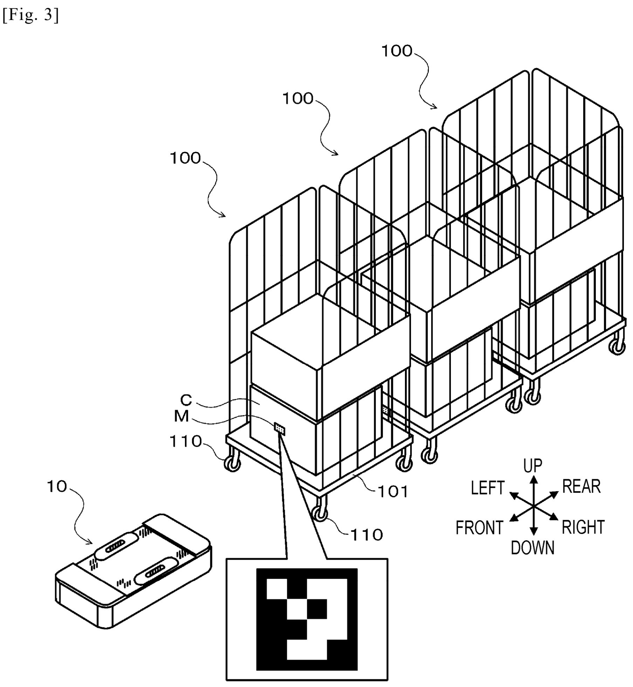

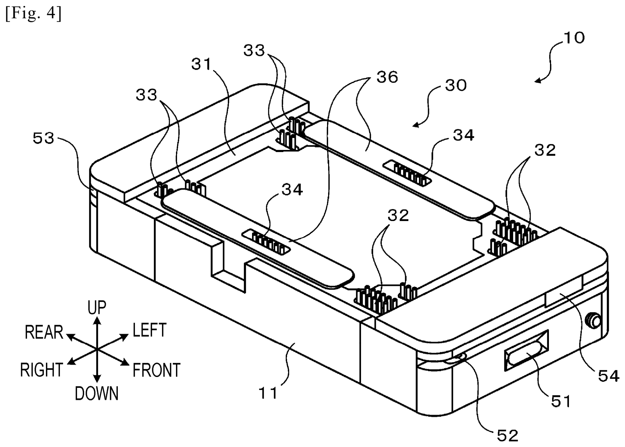

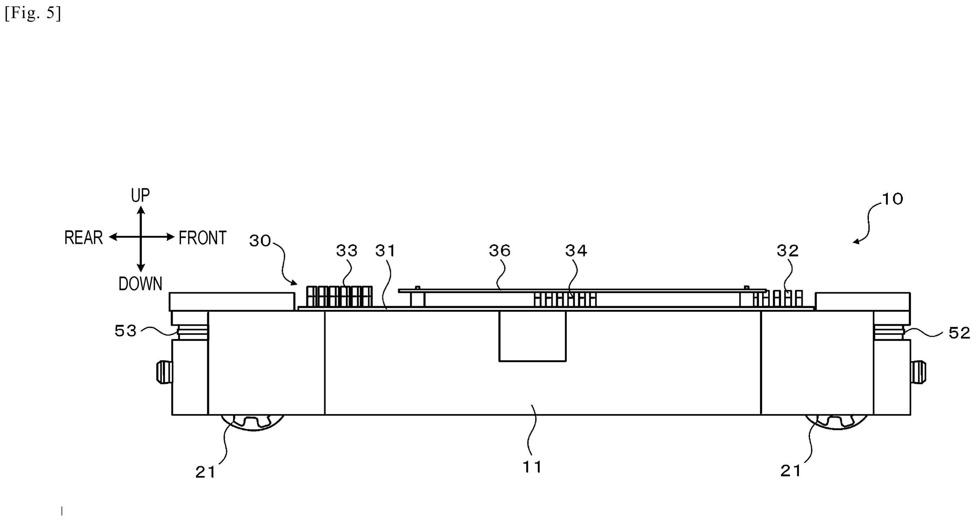

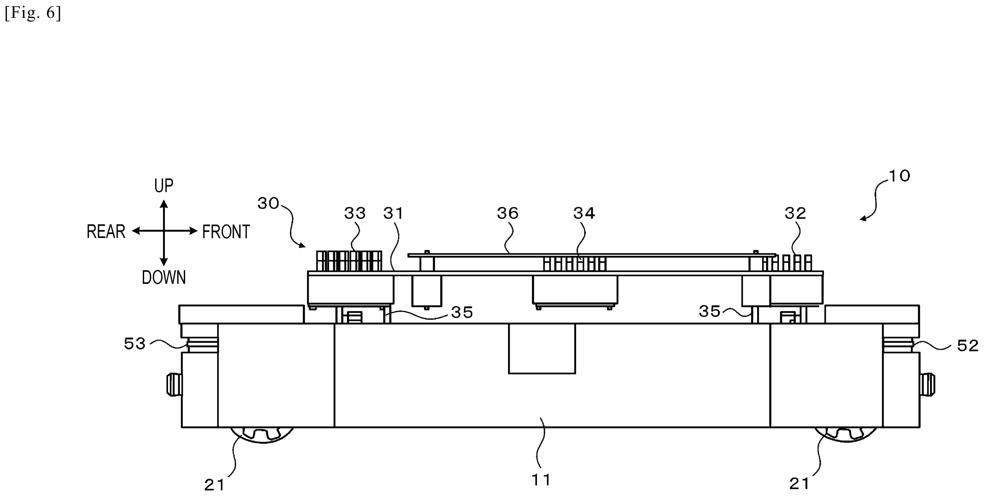

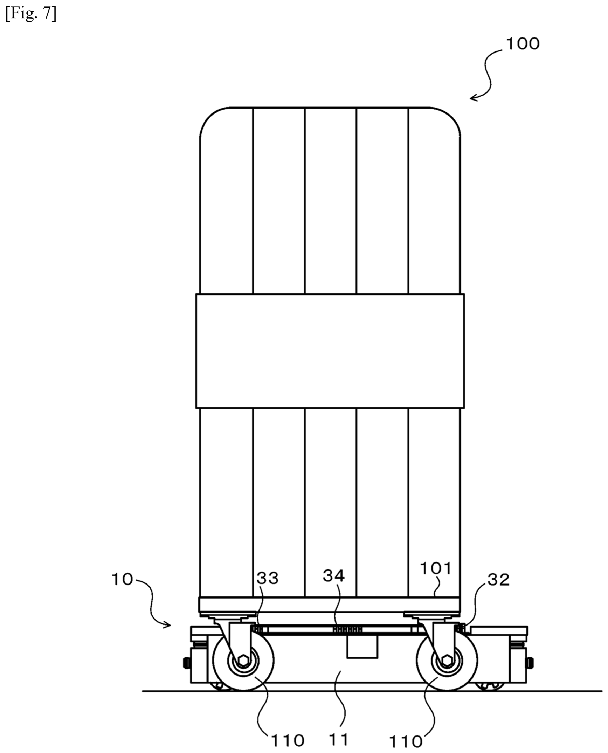

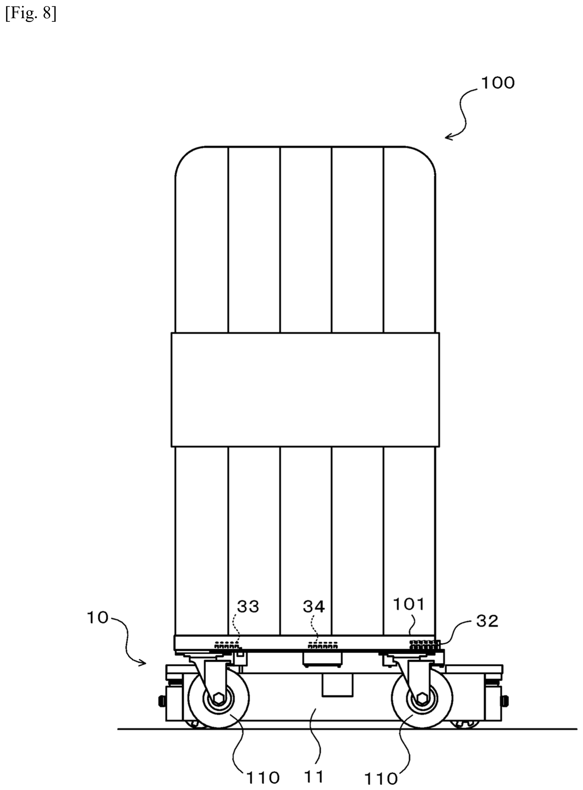

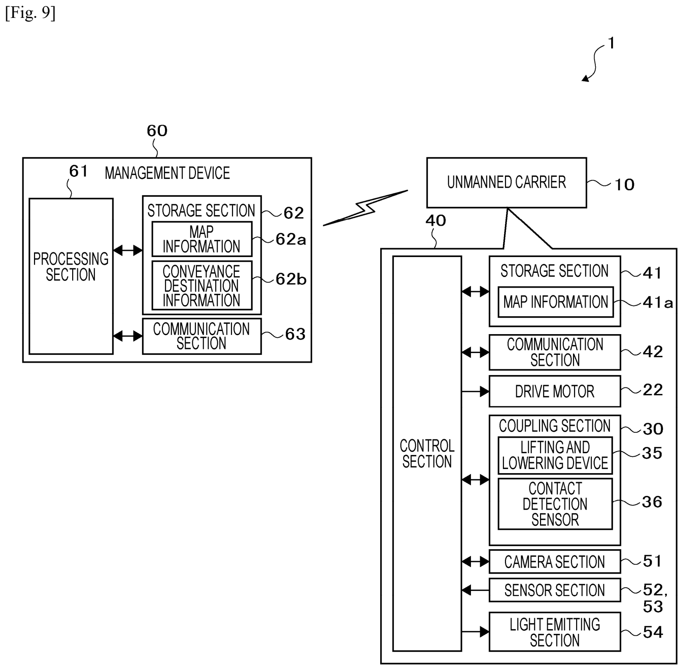

Fig. 1 is an external perspective view of multiple caged carriages 100 disposed in carriage storage area L of a shop or the like and unmanned carrier 10 that conveys caged carriages 100. Figs. 2 and 3 are external perspective views of caged carriages 100 and unmanned carrier 10. Fig. 4 is an external perspective view of unmanned carrier 10. Figs. 5 and 6 are side views of unmanned carrier 10. Fig. 7 is a view illustrating a state in which unmanned carrier 10 has entered a space below caged carriage 100. Fig. 8 is a view illustrating a state in which unmanned carrier 10 is coupled to caged carriage 100. Fig. 9 is a block diagram of conveyance system 1 including unmanned carrier 10 and management device 60.

As illustrated in Fig. 1, conveyance system 1 of the present embodiment is used in a distribution center, a warehouse, a shop, or the like having multiple shelves S, and includes one or multiple unmanned carriers 10 and management device 60 (see Fig. 9) that manages operations of unmanned carriers 10. Unmanned carrier 10 is an autonomous mobile robot (AMR) that can perform autonomous travel in which unmanned carrier 10 is coupled to caged carriage 100 to convey caged carriage 100 to designated shelf S.

For example, as illustrated in Fig. 2, caged carriage 100 includes rectangular and net-like loading platform portion 101 on which cargo C can be loaded, and multiple (four) casters 110 turnably attached to four corners of a lower surface of loading platform portion 101. Marker M such as an AR marker, a two-dimensional code, or a barcode for identifying caged carriage 100 is provided on loading platform portion 101 of caged carriage 100 (in the present embodiment, a central portion of an outer edge front end surface of loading platform portion 101). By reading marker M, unmanned carrier 10 recognizes a type of caged carriage 100 (conveyance target carriage) to be conveyed and a type of cargo C loaded on loading platform portion 101. As illustrated in Fig. 3, marker M may be attached to cargo C loaded on loading platform portion 101. Identification information for recognizing caged carriage 100 and cargo C is not limited to marker M. For example, the identification information may be a unique ID for identifying caged carriage 100. The identification information may be identification information (text, pictures, or the like) written on an outer box of cargo C.

As illustrated in Fig. 4, unmanned carrier 10 of the present embodiment has a flat rectangular parallelepiped appearance with a low height. Unmanned carrier 10 includes vehicle body portion 11, multiple (for example, four) wheels 21 rotatably attached to a bottom surface of vehicle body portion 11, and multiple (for example, four) drive motors 22 (see Fig. 9) that rotationally drive corresponding wheels 21. In the present embodiment, multiple wheels 21 are configured as mecanum wheels including multiple rollers rotatable around axes inclined by 45 degrees with respect to a rotation axis of the wheel on an outer periphery of the wheel. Unmanned carrier 10 can move vehicle body portion 11 in all directions or make vehicle body portion 11 turn (such as a spin turn, a pivot turn, or a power turn) by independently controlling rotation directions and rotation speeds of corresponding wheels 21 with multiple drive motors 22. Multiple wheels 21 may also be configured as omni wheels including multiple rollers that are rotatable around axes three-dimensionally intersecting the rotation axis of the wheel. In other words, multiple wheels 21 may be any type of wheel as long as the wheels are capable of moving or turning vehicle body portion 11 in multiple directions.

As illustrated in Figs. 5 and 6, unmanned carrier 10 includes coupling section 30 that is provided on an upper surface of vehicle body portion 11 and can be coupled to caged carriage 100 in a state in which vehicle body portion 11 has entered the space below caged carriage 100. Coupling section 30 includes flat plate-shaped lifting and lowering plate 31, coupling pins 32, 33, and 34 provided to extend upward with respect to lifting and lowering plate 31, and lifting and lowering device 35 that lifts and lowers lifting and lowering plate 31. Lifting and lowering plate 31 has a left-right width substantially equal to a left-right width of vehicle body portion 11 to cover the upper surface of vehicle body portion 11 and has a front-rear width slightly shorter than a front-rear width of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 7 and 8, coupling section 30 lifts lifting and lowering plate 31 using lifting and lowering device 35 in a state in which vehicle body portion 11 has entered the space below caged carriage 100, whereby at least one of coupling pins 32, 33, and 34 engage with an underside of loading platform portion 101 of caged carriage 100. Accordingly, unmanned carrier 10 and caged carriage 100 are coupled to each other, and unmanned carrier 10 can convey (tow) caged carriage 100.

As illustrated in Figs. 4 to 6, contact detection sensors 36 (spring sensors) for detecting that coupling section 30 (coupling pins 32, 33, and 34) is in contact with (coupled to) loading platform portion 101 of caged carriage 100 are provided on both left and right sides of lifting and lowering plate 31. Contact detection sensor 36 includes a plate that is biased upward by a spring, with its upper end positioned at approximately the same height as coupling pins 32, 33, and 34 with respect to lifting and lowering plate 31. When coupling pins 32, 33, and 34 engage with loading platform portion 101 of caged carriage 100, the plate of contact detection sensor 36 comes into contact with loading platform portion 101, and is lowered relative to coupling pins 32, 33, and 34 while the spring is compressed. Contact detection sensor 36 detects that coupling section 30 is in contact with (coupled to) loading platform portion 101 of caged carriage 100 by detecting a state in which the plate is relatively lowered.

Furthermore, as illustrated in Fig. 9, unmanned carrier 10 includes control section 40 responsible for overall control, storage section 41 that stores various information including map information 41a, communication section 42 for performing communication (wireless communication) with management device 60, camera section 51 as an imaging device, sensor sections 52 and 53, and light emitting section 54 that illuminates the front of vehicle body portion 11. Camera section 51 is installed on a front surface of vehicle body portion 11 to recognize an area in front of vehicle body portion 11. Sensor sections 52 and 53 are installed on the front surface and a rear surface of vehicle body portion 11 to detect surrounding objects. Sensor sections 52 and 53 detect surrounding objects and a distance to the objects. In the present embodiment, as sensor sections 52 and 53, a light detection and ranging (LiDAR) sensor, which scans the surrounding area with laser light, receives each reflected light, and measures a time until the reflected light is received, thereby measuring distance data for each scanning angle and obtaining two-dimensional point cloud data on the surrounding area, is used. Light emitting section 54 is installed on the front surface of vehicle body portion 11, and illuminates the front to make it easier for camera section 51 to recognize the surrounding objects in dark environments.

Control section 40 is configured as a microprocessor centered on CPU, and includes ROM storing a processing program, RAM temporarily storing data, a timing section, and the like in addition to the CPU. As illustrated in Fig. 9, an image signal from camera section 51, a detection signal from sensor sections 52 and 53, a detection signal from contact detection sensor 36, and the like are input to control section 40. Control section 40 outputs a control signal to drive motor 22, a control signal to lifting and lowering device 35, and the like.

As illustrated in Fig. 9, management device 60 includes processing section 61, storage section 62, and communication section 63 for performing communication (wireless communication) with each unmanned carrier 10. Although not illustrated, input devices such as a mouse and a keyboard, a display, a printer, and the like are connected to management device 60. Processing section 61 is configured as a microprocessor centered on CPU, and includes ROM storing a processing program, RAM temporarily storing data, and the like in addition to the CPU. Storage section 62 is a storage such as an HDD or an SSD, and storage section 62 stores various information such as map information 62a and conveyance destination information 62b.

Conveyance destination information 62b is information in which a type of a cargo and a conveyance destination of the cargo are associated with each other, and is registered in advance by an operator. Further, management device 60 creates unique marker M for each type of cargo according to an instruction of the operator, and prints (issues) created marker M using the printer. Then, the operator attaches printed marker M to a designated position of caged carriage 100 or the cargo loaded on caged carriage 100. Accordingly, unmanned carrier 10 can recognize a type of a cargo to be conveyed by reading marker M with camera section 51, and can acquire a conveyance destination (destination) of caged carriage 100 (conveyance target carriage) loaded with the cargo based on the recognized type of the cargo.

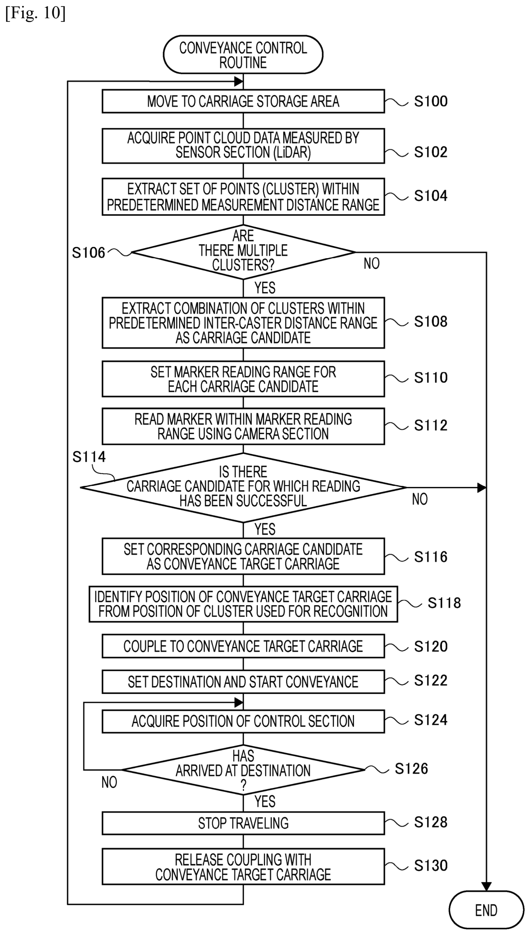

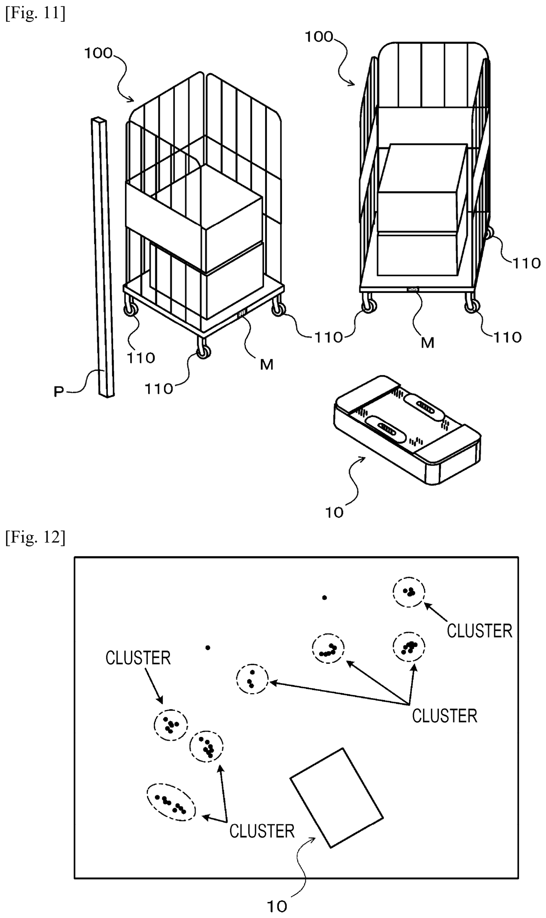

Next, an operation of conveyance system 1 of the present embodiment configured in this manner will be described. In particular, as illustrated in Fig. 1, the operation of unmanned carrier 10 when conveying multiple caged carriages 100 disposed in carriage storage area L one by one to each conveyance destination will be described. Fig. 10 is a flowchart illustrating an example of a conveyance control routine executed by control section 40 of unmanned carrier 10. This process is executed when management device 60 instructs the conveyance of caged carriage 100 (cargo). Hereinafter, as illustrated in Fig. 11, an operation of recognizing caged carriage 100 and identifying the position thereof when unmanned carrier 10 conveys caged carriage 100 in the vicinity will be described.

When the conveyance control routine is executed, control section 40 first controls drive motor 22 such that unmanned carrier 10 moves to a position defined in advance in carriage storage area L (S100). Subsequently, control section 40 measures point cloud data around carriage storage area L using sensor section 52 (LiDAR) (S102). Next, control section 40 extracts, from the measured point cloud data, a set of points (hereinafter, referred to as a cluster) included in predetermined measurement distance range α from unmanned carrier 10 (S103). Fig. 12 is a view illustrating an example of the point cloud data around unmanned carrier 10 and the cluster. Here, predetermined measurement distance range α is a range including a distance at which caster 110 of caged carriage 100 disposed in carriage storage area L is measured from unmanned carrier 10, and a range in which a predetermined margin is taken into consideration in a distance measured experimentally in advance is defined as predetermined measurement distance range α. Therefore, one cluster is a caster candidate that may be one caster 110. Then, control section 40 determines whether multiple clusters (caster candidates) have been extracted (S106). When it is determined that the multiple clusters are not extracted, control section 40 determines that caged carriage 100 cannot be found, and ends the conveyance control routine.

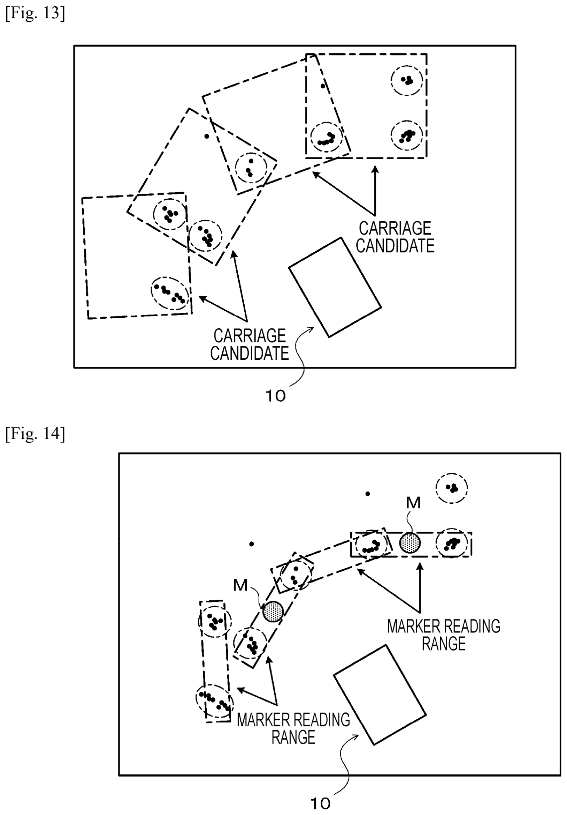

On the other hand, when it is determined that multiple clusters are extracted, control section 40 extracts, as a carriage candidate, a combination of clusters within predetermined inter-caster distance range β from among the multiple extracted clusters (S108). Fig. 13 is a view illustrating an example of the carriage candidate. Predetermined inter-caster distance range β is a range including a distance between two front wheels (casters 110) of caged carriage 100, and a range in which a predetermined margin is taken into consideration in an inter-caster distance in a specification is defined as predetermined inter-caster distance range β. Therefore, a combination of two clusters within predetermined inter-caster distance range β is a carriage candidate that may be one caged carriage 100. However, when the carriage candidate is recognized as one caged carriage 100 without further processing, caged carriage 100 may be erroneously recognized. For example, as illustrated in Fig. 11, when two caged carriages 100 are disposed close to each other, caster 110 of first caged carriage 100 and caster 110 of second caged carriage 100 may be included in predetermined inter-caster distance range β, and there is a possibility that parts of two caged carriages 100 are erroneously recognized as one caged carriage 100. As illustrated in Fig. 11, when there is, around caged carriage 100, other member P that can be recognized as a cluster, caster 110 of caged carriage 100 and another member P may be included in predetermined inter-caster distance range β, and they may be erroneously recognized as one caged carriage 100. Therefore, in the present embodiment, control section 40 performs the following processing in order to accurately recognize caged carriage 100 from among carriage candidates.

That is, when the carriage candidates are extracted, control section 40 sets a marker reading range for each carriage candidate (S110). Fig. 14 is a view illustrating an example of the marker reading range. The marker reading range is defined to include a designated attachment position of marker M based on a position of the combination of two clusters (caster candidate). In the present embodiment, the marker reading range includes a margin so that marker M can be normally read even when the attachment position of marker M is deviated from the designated position by a certain amount. For example, as illustrated in Fig. 2, when the central portion of the outer edge front end surface of loading platform portion 101 is designated as the attachment position of marker M, the marker reading range is defined to include the entire range of the outer edge front end surface so that marker M can be normally read regardless of the position where marker M is attached in the outer edge front end surface of loading platform portion 101.

Then, control section 40 causes camera section 51 to read marker M within the marker reading range for each carriage candidate (S112), and determines whether there is a carriage candidate for which marker M has been successfully read (S114). When it is determined that there is no carriage candidate for which marker M is successfully read, control section 40 determines that caged carriage 100 cannot be found, and ends the conveyance control routine.

On the other hand, when it is determined that there is a carriage candidate for which marker M is successfully read, control section 40 sets the corresponding carriage candidate as the conveyance target carriage (S116). When it is determined that there are multiple carriage candidates for which marker M is successfully read, control section 40 sets the carriage candidate closest to unmanned carrier 10 as the conveyance target carriage. Subsequently, control section 40 identifies the position of the conveyance target carriage using the position of the combination of the two clusters (casters 110) used for recognizing the conveyance target carriage (S118). For example, the position of the conveyance target carriage can be a central position between two clusters.

Next, control section 40 couples unmanned carrier 10 to caged carriage 100 (conveyance target carriage) (S120). This processing is performed as follows. That is, control section 40 first controls drive motor 22 such that unmanned carrier 10 enters a space below the conveyance target carriage from between two casters 110 of the conveyance target carriage, causes lifting and lowering device 35 to lift coupling pins 32, 33, and 34 to engage with loading platform portion 101 of the conveyance target carriage, and couples unmanned carrier 10 with the conveyance target carriage. Then, control section 40 sets a destination and starts conveying the conveyance target carriage (S122). The destination is set by recognizing the type of cargo C to be mounted on the conveyance target carriage from marker M read in S112, acquiring the conveyance destination of cargo C corresponding to the recognized type of cargo C, and setting the destination. The conveyance destination is acquired by receiving, from management device 60, the conveyance destination derived from conveyance destination information 62b based on the recognized type of cargo C. The conveyance target carriage is conveyed by acquiring a conveyance route and controlling drive motor 22 such that the conveyance from carriage storage area L to the destination according to the acquired conveyance route is started. The conveyance route is acquired by obtaining a surrounding shape based on the point cloud data measured by sensor sections 52 and 53 (LiDAR), recognizing a current location of the vehicle by comparing (collating) the obtained surrounding shape with map information 41a stored in storage section 41, and searching the route using map information 41a based on the recognized current location and the designated destination. In the acquisition of the conveyance route, the current location may be recognized and transmitted to management device 60, and the conveyance route generated by management device 60 based on the current location may be received.

When the conveyance of the conveyance target carriage is started, control section 40 acquires a position of control section 40 (S124) and determines whether the conveyance target carriage has arrived at the destination (S126). When it is determined that the conveyance target carriage has not arrived at the destination, control section 40 returns to S124, and when it is determined that the conveyance target carriage has arrived at the destination, control section 40 stops traveling (S128), releases the coupling with the conveyance target carriage (S130), and then returns to S100. Specifically, control section 40 releases the coupling with the conveyance target carriage by causing lifting and lowering device 35 to lower coupling pins 32, 33, and 34. As described above, unmanned carrier 10 is coupled to one of multiple caged carriages 100 disposed in carriage storage area L, conveys caged carriage 100 to the conveyance destination, and when the conveyance to the conveyance destination is completed, returns to carriage storage area L and repeats an operation of conveying next caged carriage 100, thereby conveying multiple caged carriages 100 disposed in carriage storage area L. Control section 40 stores a coupling position when coupled to the conveyance target carriage in S120 in storage section 41, and controls drive motor 22 such that the unmanned carrier 10 moves to the stored coupling position of carriage storage area L when returning to carriage storage area L in S100. Accordingly, it is possible to subsequently recognize and convey multiple caged carriages 100 aligned and arranged in carriage storage area L.

Here, a correspondence relationship between main elements of the embodiment and main elements of the present disclosure described in the claims will be described. That is, caged carriage 100 of the present embodiment is an example of a carriage of the present disclosure, control section 40 and sensor sections 52 and 53 that execute the processing of S102 and S104 of the conveyance control routine are examples of a candidate recognition section, camera section 51 is an example of a reading section, and control section 40 and camera section 51 that execute the processing of S106 to S118 of the conveyance control routine are examples of a carriage recognition section. Sensor sections 52 and 53 are examples of a measurement section.

It is needless to say that the present disclosure is not limited to the embodiment described above, but may be implemented in various forms as long as they belong to the scope of the present disclosure.

For example, in the embodiment described above, when caged carriage 100 cannot be found in carriage storage area L, control section 40 ends the conveyance control routine, but when caged carriages 100 are disposed in multiple different carriage storage places, unmanned carrier 10 may move to second carriage storage place and search for caged carriage 100 when caged carriage 100 cannot be found in first carriage storage place.

In the embodiment described above, unmanned carrier 10 is configured to tow caged carriage 100 by engaging coupling pin 34 of coupling section 30 with loading platform portion 101 of caged carriage 100. However, unmanned carrier 10 may lift and convey caged carriage 100 using coupling section 30.

As described above, in the unmanned carrier according to the present disclosure, by recognizing the feature portion candidate of the carriage in the vicinity and setting the reading range of the identification information based on the position of the feature portion candidate, it is possible to more reliably read the identification information provided on the carriage or the cargo even when the identification information is not attached to the designated position of the carriage. As a result, it is possible to more accurately recognize the carriage.

The unmanned carrier according to the present disclosure may further include a measurement section configured to measure point cloud information in the vicinity, and the candidate recognition section may recognize the feature portion candidate based on the point cloud information measured by the measurement section. In this way, it is possible to easily recognize the feature portion candidate suitable for recognition of the carriage.

In this case, the carriage recognition section may set the reading range with reference to the position of the feature portion candidate recognized by the candidate recognition section, and when the identification information included in the reading range is successfully read, the carriage recognition section may recognize the carriage and identify a position of the carriage based on the position of the feature portion candidate used for recognizing the carriage. Alternatively, the candidate recognition section may recognize the caster candidates of the carriage from the point cloud information measured by the measurement section, and the carriage recognition section may extract a combination of caster candidates separated from each other by a range of an inter-caster distance defined in advance from among the caster candidates recognized by the candidate recognition section, set the reading range with reference to a position of the extracted combination of the caster candidates, and when the identification information included in the reading range is successfully read, recognize the carriage and identify the position of the carriage based on the position of the combination of the caster candidates used for recognizing the carriage. In this way, it is possible to more accurately identify the position of the carriage from the position of the feature portion candidate in addition to the recognition of the carriage. In the latter case, the candidate recognition section may recognize, as the caster candidate, a set of points within a range of a measurement distance defined in advance in the point cloud information. In this way, it is possible to more appropriately recognize the caster candidate by measuring the point cloud information.

The present disclosure is not limited to a form of an unmanned carrier, and may be a form of a carriage position identification method.

### Industrial Applicability

The present disclosure can be applied to a manufacturing industry of an unmanned carrier and the like.

### Reference Signs List

1: unmanned carrier system, 10: unmanned carrier, 11: vehicle body portion, 21: wheel, 22: drive motor, 30: coupling section, 31: lifting and lowering plate, 32, 33, 34: coupling pin, 35: lifting and lowering device, 36: contact detection sensor, 40: control section, 41: storage section, 41a: map information, 42: communication section, 51: camera section, 52, 53: sensor section, 54: light emitting section, 60: management device, 61: processing section, 62: storage section, 62a: map information, 62b: conveyance destination information, 63: communication section, 100: caged carriage, 101: loading platform portion, 110: caster, L: carriage storage area, M: marker, S: shelf.

## Claims

1. An unmanned carrier for conveying a carriage, the unmanned carrier comprising:
a candidate recognition section configured to recognize a feature portion candidate of the carriage in vicinity;
a reading section configured to read identification information provided on the carriage or a cargo mounted on the carriage; and
a carriage recognition section configured to set a reading range based on a position of the feature portion candidate recognized by the candidate recognition section and recognize the carriage based on a reading result within the reading range obtained by the reading section.

2. The unmanned carrier according to Claim 1, further comprising:
a measurement section configured to measure point cloud information in vicinity,
wherein the candidate recognition section is configured to recognize the feature portion candidate based on the point cloud information measured by the measurement section.

3. The unmanned carrier according to Claim 2, wherein the carriage recognition section is configured to set the reading range with reference to the position of the feature portion candidate recognized by the candidate recognition section, and when the identification information included in the reading range is successfully read, recognize the carriage and identify a position of the carriage based on the position of the feature portion candidate used for recognizing the carriage.

4. The unmanned carrier according to Claim 2,
wherein the candidate recognition section is configured to recognize caster candidates of the carriage from the point cloud information measured by the measurement section, and
the carriage recognition section is configured to extract a combination of caster candidates that are separated from each other by a range of an inter-caster distance defined in advance from among the caster candidates recognized by the candidate recognition section, set the reading range with reference to a position of the extracted combination of the caster candidates, and when the identification information included in the reading range is successfully read, recognize the carriage and identify a position of the carriage based on the position of the combination of the caster candidates used for recognizing the carriage.

5. The unmanned carrier according to Claim 4, wherein the candidate recognition section is configured to recognize, as the caster candidates, a set of points within a range of a measurement distance defined in advance in the point cloud information.

6. A carriage position identification method for identifying a position of a carriage, the carriage position identification method comprising:
recognizing a feature portion candidate of the carriage in vicinity;
setting a reading range based on a position of the recognized feature portion candidate;
reading identification information provided on the carriage or a cargo mounted on the carriage in the reading range; and
recognizing the carriage based on a reading result and identifying the position of the carriage based on the position of the feature portion candidate used for recognizing the carriage.
